# EUROPEAN PATENT SPECIFICATION

(11) **EP 4 164 004 B1**
(45) Date of publication and mention of the grant of the patent: **10.06.2026**
(21) Application number: 22759992.5
(22) Date of filing: 21.02.2022
(51) Int. Cl.: H01M 4/62, H01M 10/42, H01M 4/131, H01M 10/052, C01G 51/00, H01M 4/02, H01M 4/505, H01M 4/525, C01G 51/42

(54) **SACRIFICIAL POSITIVE ELECTRODE MATERIAL WITH REDUCED GAS EMISSIONS, AND LITHIUM SECONDARY BATTERY COMPRISING SAME**
OPFERPOSITIVELEKTRODENMATERIAL MIT REDUZIERTEN GASEMISSIONEN UND LITHIUMSEKUNDÄRBATTERIE DAMIT
MATÉRIAU D'ÉLECTRODE POSITIVE SACRIFICIELLE À ÉMISSIONS DE GAZ RÉDUITES, ET BATTERIE SECONDAIRE AU LITHIUM LE COMPRENANT

(30) Priority: 23.02.2021 KR 20210024264
(43) Date of publication of application: 12.04.2023
(73) Proprietor: LG Energy Solution, Ltd., Seoul 07335 (KR)
(72) Inventor: YOO, Tae Gu, Daejeon 34122 (KR); JUNG, Wang Mo, Daejeon 34122 (KR); JO, Chi Ho, Daejeon 34122 (KR); KIM, Ji Hye, Daejeon 34122 (KR); JUNG, Hae Jung, Daejeon 34122 (KR); HEO, Jong Wook, Daejeon 34122 (KR)
(74) Representative: Hoffmann Eitle
(86) International application number: PCT/KR2022/002491
(87) International publication number: WO 2022/182074

(56) References cited:
- EP-A1- 4 084 152
- JP-B2- 6 428 647
- KR-A- 20130 079 109
- KR-A- 20190 059 115
- KR-A- 20190 079 534
- KR-A- 20200 066 048
- US-A1- 2016 351 905

## Description

### [Technical Field]

The present invention relates to a sacrificial positive electrode material with a reduced amount of gas generated during charging by being doped with a zinc ion and having controlled electrical properties, and a lithium secondary battery including the same.

This application claims the benefit of priority based on Korean Patent Application No. 10-2021-0024264, filed on February 23, 2021.

### [Background Art]

Recently, demand for secondary batteries as a power source has rapidly increased. Among secondary batteries, lithium secondary batteries having a high energy density and voltage, a long cycle lifespan, and a low self-discharge rate have been commercialized and widely used.

As a negative electrode material for the lithium secondary batteries, graphite has been mainly used. However, since graphite has a low capacity per unit mass of 372 mAh/g, it is difficult to increase the capacity of lithium secondary batteries. In order to increase the capacity of lithium secondary batteries, as a non-carbon-based negative electrode material having a higher energy density than graphite, a negative electrode material that forms an intermetallic compound with lithium, such as silicon, tin, an oxide thereof, and the like, has been developed and used. The non-carbon-based negative electrode material has high capacity, but the initial efficiency thereof is low, so a large amount of lithium is consumed during initial charging and discharging, and irreversible capacity loss is large.

In this regard, there has been proposed a method of overcoming the irreversible capacity loss of the negative electrode using a material that is able to provide a lithium ion source or reservoir to a positive electrode material and exhibits electrochemical activity after an initial cycle so as not to degrade the overall performance of a battery. Specifically, a method of applying an oxide including an excessive amount of lithium, such as Li₆CoO₄, as a sacrificial positive electrode material or an irreversible additive (or overdischarge inhibitor) to a positive electrode is known.

However, such a sacrificial positive electrode material or irreversible additive causes oxidation not only during activation of a battery but also during charging and discharging after the activation due to having an unstable structure, and thus oxygen gas may be generated inside a battery. The generated oxygen gas may cause volume expansion and the like and thus acts as one of the main factors leading to degradation of battery performance.

Therefore, there is a demand for the development of a sacrificial positive electrode material having a reduced amount of oxygen gas generated during a charging/discharging process of a battery and a high charge/discharge capacity.

US 2016/0351905 A1 describes a nonaqueous electrolyte secondary battery including a positive electrode containing a positive electrode active material, a negative electrode, and a nonaqueous electrolyte.

EP 4 084 152 A1 describes a lithium transition metal oxide, a positive electrode additive for a lithium secondary battery and a lithium secondary battery comprising the same.

### [Related-Art Documents]

### [Patent Documents]

Korean Laid-Open Patent Publication No. 10-2019-0059115

### [Disclosure]

### [Technical Problem]

An object of the present invention is to provide a sacrificial positive electrode material having a higher charge/discharge capacity while having a small amount of oxygen gas generated during a charging/discharging process of a battery, and a positive electrode and lithium secondary battery including the same.

### [Technical Solution]

One aspect of the present invention provides a sacrificial positive electrode material which includes a lithium cobalt zinc oxide represented by the following Chemical Formula 1 and has a powder electrical conductivity of 1 × 10⁻⁴ S/cm to 1 × 10⁻² S/cm:

[Chemical Formula 1] LiₓCo_{(1-y)}Zn_{y}O₄

in Chemical Formula 1, x and y satisfy 5≤x≤7 and 0.05≤y≤0.5.

Specifically, y in Chemical Formula 1 may satisfy 0.2≤y≤0.4.

In addition, the sacrificial positive electrode material may have a powder electrical conductivity of 1 × 10⁻³ S/cm to 9 × 10⁻³ S/cm.

In addition, the sacrificial positive electrode material may have a tetragonal structure with a space group of P4₂/nmc.

Another aspect of the present invention provides a positive electrode which includes: a positive electrode current collector; and a positive electrode mixture layer including a positive electrode active material, a conductive material, an organic binder polymer, and a sacrificial positive electrode material on the positive electrode current collector, wherein the sacrificial positive electrode material includes a lithium cobalt zinc oxide represented by the following Chemical Formula 1 and has a powder electrical conductivity of 1 × 10⁻⁴ S/cm to 1 × 10⁻² S/cm:

[Chemical Formula 1] LiₓCo_{(1-y)}Zn_{y}O₄

in Chemical Formula 1, x and y satisfy 5≤x≤7 and 0.05≤y≤0.5.

Here, the sacrificial positive electrode material may be included in an amount of 0.001 to 5.0 parts by weight with respect to 100 parts by weight of the positive electrode active material.

In addition, the conductive material may be included in an amount of 0.5 to 10 parts by weight with respect to a total of 100 parts by weight of the positive electrode mixture layer.

In addition, the conductive material may include one or more carbon-based materials selected from the group consisting of natural graphite, artificial graphite, carbon black, acetylene black, Ketjen black, and carbon fibers.

In addition, the positive electrode active material may be a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr), and zirconium (Zr).

In addition, the positive electrode mixture layer may have an average thickness of 100 µm to 200 µm.

In addition, the positive electrode may have a rate of increase of resistance of 10% or less after 30-cycle charging and discharging relative to a resistance during initial charging and discharging.

Still another aspect of the present invention provides an electrode assembly including the above-described positive electrode.

Yet another aspect of the present invention provides a lithium secondary battery including the above-described electrode assembly.

### [Advantageous Effects]

A sacrificial positive electrode material according to the present invention can reduce the generation of gas, particularly, oxygen (O₂) gas, during charging and discharging of a battery after activation and achieve a high charge/discharge capacity by including a lithium cobalt metal oxide represented by Chemical Formula 1, which is doped with a specific fraction of zinc, and having a powder electrical conductivity adjusted within a specific range, and thus the stability and lifespan of a battery including the same are effectively enhanced.

### [Brief Description of the Drawings]

FIG. 1 is a graph showing a gas generation amount according to the number of charging and discharging cycles (temperature condition: 45 °C) of a sacrificial positive electrode material according to whether or not zinc (Zn) is doped.
FIG. 2 is a graph showing a gas generation amount according to the storage time (temperature condition: 60 °C) of a sacrificial positive electrode material according to whether or not zinc (Zn) is doped.
FIG. 3 is a graph showing the component and amount of gas generated according to the charging/discharging and storage time of a sacrificial positive electrode material according to whether or not zinc (Zn) is doped.
FIG. 4 is a graph showing the initial charge/discharge capacity of a sacrificial positive electrode material according to whether or not zinc (Zn) is doped.

### [Detailed Description of the Preferred Embodiments]

As the present invention allows for various changes and a variety of embodiments, particular embodiments will be described in detail in the detailed description.

In the present invention, it should be understood that the term "include(s)" or "have(has)" is merely intended to indicate the presence of features, numbers, steps, operations, components, parts, or combinations thereof, and not intended to preclude the possibility of the presence of addition of one or more other features, numbers, steps, operations, components, parts, or combinations thereof.

In addition, in the present invention, when a portion of a layer, film, region, plate, or the like is referred to as being "on" another portion, this includes not only the case where the portion is "directly on" but also the case where there is another portion interposed therebetween. Conversely, when a portion of a layer, film, region, plate, or the like is referred to as being "under" another portion, this includes not only the case where the portion is "directly under" but also the case where there is another portion interposed therebetween. Also, herein, what is referred to as being disposed "on" may include being disposed not only on an upper part but also on a lower part.

Hereinafter, the present invention will be described in more detail.

### Sacrificial positive electrode material

One aspect of the present invention provides a sacrificial positive electrode material which includes a lithium cobalt zinc oxide represented by the following Chemical Formula 1 and has a powder electrical conductivity of 1 × 10⁻⁴ S/cm to 1 × 10⁻² S/cm:

[Chemical Formula 1] LiₓCo_{(1-y)}Zn_{y}O₄

in Chemical Formula 1, x and y satisfy 5≤x≤7 and 0.05≤y≤0.5.

The sacrificial positive electrode material according to the present invention includes a lithium cobalt metal oxide represented by Chemical Formula 1 as a main component. Here, the "main component" means that the lithium cobalt metal oxide represented by Chemical Formula 1 is included in an amount of 80 wt% or more, 90 wt% or more, 95 wt% or more, or 97.5 wt% or more with respect to the total weight of the sacrificial positive electrode material. In some cases, it means that the sacrificial positive electrode material is composed only of the lithium cobalt metal oxide represented by Chemical Formula 1, that is, that the lithium cobalt metal oxide represented by Chemical Formula 1 is included in an amount of 100 wt%.

The lithium cobalt metal oxide represented by Chemical Formula 1 has a structure in which zinc is doped at the cobalt position of a lithium cobalt oxide that emits a large amount of lithium ions, and in this case, the doping amount of zinc may be a 5 to 50 mole fraction (i.e., 0.05≤y≤0.5), specifically, a 10 to 50 mole fraction (0.1≤y≤0.5), a 15 to 50 mole fraction (0.15≤y≤0.5), a 15 to 45 mole fraction (0.15≤y≤0.45), a 20 to 40 mole fraction (0.2≤y≤0.4), or a 25 to 35 mole fraction (0.25≤y≤0.35). In the present invention, the doping amount of zinc may be adjusted within the above mole fraction range to alleviate the structural distortion of the lithium cobalt oxide, and thus structural stability may be further enhanced.

In addition, the lithium cobalt metal oxide represented by Chemical Formula 1 may have a tetragonal crystal structure, particularly, a space group of P4₂/nmc. Generally, a lithium metal oxide having a tetragonal crystal structure has an unstable structure due to the distortion of a tetrahedral structure formed by a cobalt element and an oxygen element, and the structural instability causes the generation of gas including oxygen gas even during charging after activation of a battery. However, the sacrificial positive electrode material according to the present invention may effectively reduce a gas generation amount even when including the lithium metal oxide represented by Chemical Formula 1 having a tetragonal crystal structure.

In addition, the sacrificial positive electrode material may have a powder electrical conductivity of 1 × 10⁻⁴ S/cm to 1 × 10⁻² S/cm, specifically, 1 × 10⁻⁴ S/cm to 5 × 10⁻³ S/cm, 5 × 10⁻⁴ S/cm to 1 × 10⁻² S/cm, 5 × 10⁻⁴ S/cm to 5 × 10⁻³ S/cm, 8 × 10⁻⁴ S/cm to 9 × 10⁻³ S/cm, 1 × 10⁻³ S/cm to 9 × 10⁻³ S/cm, 1 × 10⁻³ S/cm to 8 × 10⁻³ S/cm, or 2.5 × 10⁻³ S/cm to 5.5 × 10⁻³ S/cm. The powder electrical conductivity of the sacrificial positive electrode material may be adjusted according to one or more condition for preparation of the sacrificial positive electrode material and the like, and when the powder electrical conductivity is adjusted within the above range, charge/discharge capacity may be enhanced while reducing an amount of gas generated during charging of a battery.

The sacrificial positive electrode material according to the present invention can reduce the generation of gas, particularly, oxygen (O₂) gas, in an electrode assembly during charging and discharging of a battery after activation and achieve a high charge/discharge capacity by including the lithium cobalt metal oxide represented by Chemical Formula 1, which is doped with a specific fraction of zinc, and having a powder electrical conductivity adjusted within a specific range, and thus the stability and lifespan of a battery including the same are effectively enhanced.

### Positive electrode

Another aspect of the present invention provides a positive electrode which includes: a positive electrode current collector; and a positive electrode mixture layer including a positive electrode active material, a conductive material, an organic binder polymer, and a sacrificial positive electrode material on the positive electrode current collector, wherein the sacrificial positive electrode material includes a lithium cobalt zinc oxide represented by the following Chemical Formula 1 and has a powder electrical conductivity of 1 × 10⁻⁴ S/cm to 1 × 10⁻² S/cm:

[Chemical Formula 1] LiₓCo_{(1-y)}Zn_{y}O₄

in Chemical Formula 1, x and y satisfy 5≤x≤7 and 0.05≤y≤0.5.

The positive electrode according to the present invention has a structure in which a positive electrode mixture layer is formed on a positive electrode current collector, wherein the positive electrode mixture layer includes a sacrificial positive electrode material prepared by the method of the present invention and including the lithium cobalt metal oxide represented by Chemical Formula 1 together with a positive electrode active material, a conductive material, and an organic binder polymer, and thus charge capacity is high, and the generation of gas, particularly, oxygen (O₂) gas, during charging and discharging of a battery is effectively reduced.

In this case, the positive electrode active material may be a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr), and zirconium (Zr). For example, the positive electrode active material may be a layered compound such as a lithium cobalt oxide (LiCoO₂), a lithium nickel oxide (LiNiO₂), or the like or a layered compound substituted with one or more transition metals; a lithium manganese oxide represented by the chemical formula Li₁₊ₓMn₂₋ₓO₄ (where x is 0 to 0.33) such as LiMnO₃, LiMn₂O₃, LiMnO₂, or the like; a lithium copper oxide such as Li₂CuO₂ or the like; a vanadium oxide such as LiV₃O₈, Li₃VO₄, V₂O₅, Cu₂V₂O₇, or the like; a Ni-site-type lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); a lithium manganese composite oxide represented by LiNiₓMn₂₋ₓO₄ and having a spinel structure; LiMn₂O₄ in which some Li ions in the chemical formula have been substituted with alkaline earth metal ions; a disulfide compound; Fe₂(MoO₄)₃; or the like.

The sacrificial positive electrode material may be included in an amount of 0.001 to 5.0 parts by weight with respect to 100 parts by weight of the positive electrode active material. More specifically, the sacrificial positive electrode material may be included in an amount of 0.001 to 4.0 parts by weight, 0.001 to 3.0 parts by weight, 0.001 to 2.0 parts by weight, 0.001 to 1.0 parts by weight, 0.01 to 2.0 parts by weight, 0.05 to 2.0 parts by weight, 0.1 to 2.0 parts by weight, or 0.1 to 1.5 parts by weight with respect to 100 parts by weight of the positive electrode active material.

The conductive material may be added in an amount of 1 to 20 parts by weight, specifically, 1 to 10 parts by weight, 1 to 5 parts by weight, 3 to 8 parts by weight, or 2 to 5 parts by weight with respect to 100 parts by weight of the positive electrode active material.

In addition, the conductive material is not particularly limited as long as it does not cause a chemical change in a battery and has conductivity. For example, materials may be used such as: graphite such as natural graphite, artificial graphite, or the like; carbon black such as acetylene black, Ketjen black, channel black, furnace black, lamp black, thermal black, or the like; a conductive fiber such as carbon fiber, metal fiber, or the like; fluorocarbon; metal powder such as aluminum powder, nickel powder, or the like; a conductive whisker such as zinc oxide, potassium titanate, or the like; a conductive metal oxide such as titanium oxide or the like; or a conductive material such as a polyphenylene derivative or the like.

The organic binder polymer is a component that aids in the binding of the active material, the conductive material, and the like to one another and to a current collector and may be added in an amount of 1 to 20 parts by weight, specifically, 1 to 10 parts by weight, 1 to 5 parts by weight, 3 to 8 parts by weight, or 2 to 5 parts by weight with respect to 100 parts by weight of the positive electrode active material.

In addition, examples of the organic binder polymer include polyvinylidene fluoride (PVdF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diether polymer (EPDM), a sulfonated EPDM, styrene-butyrene rubber, fluoro-rubber, and various copolymers thereof.

The positive electrode may further include, in the positive electrode mixture layer, a filler for suppressing the expansion of the positive electrode in addition to the positive electrode active material, the conductive material, and the organic binder polymer, and the filler is not particularly limited as long as it is a fibrous material that does not cause a chemical change in a battery. Specifically, an olefin-based polymer such as polyethylene, polypropylene, or the like, a fibrous material such as glass fiber, carbon fiber, or the like may be used as the filler.

As one example, the positive electrode mixture layer may include, with respect to 100 parts by weight of a lithium nickel cobalt manganese oxide (LiNi_{0.6}Co_{0.2}Mn_{0.2}O₂), 1 part by weight of a sacrificial positive electrode material (Li₆Co_{0.7}Zn_{0.3}O₄), 5 parts by weight of acetylene black as a conductive material, and 10 parts by weight of a PVdF binder.

In addition, the positive electrode mixture layer may have an average thickness of 100 µm to 200 µm, specifically, 120 µm to 180 µm, 140 µm to 170 µm, or 150 µm to 200 µm.

Additionally, the positive electrode mixture layer may have a single-layer structure or a multi-layer structure having two or more layers. In the case of the multi-layer structure having two or more layers, the amount of the sacrificial positive electrode material included in the positive electrode mixture layer may be different, and the types and/or amounts of the positive electrode active material, the conductive material, and the binder may be the same or different.

As one example, the positive electrode mixture layer may have a two-layer structure in which a first mixture layer and a second mixture layer are positioned on a positive electrode current collector, wherein the first mixture layer may include, with respect to 100 parts by weight of a lithium nickel cobalt manganese oxide (LiNi_{0.6}Co_{0.2}Mn_{0.2}O₂), 1 part by weight of a sacrificial positive electrode material (Li₆Co_{0.7}Zn_{0.3}O₄), 5 parts by weight of acetylene black as a conductive material, and 10 parts by weight of a PVdF binder, and the second mixture layer may include, with respect to 100 parts by weight of a lithium nickel cobalt manganese oxide (LiNi_{0.6}Co_{0.2}Mn_{0.2}O₂), 2 parts by weight of a sacrificial positive electrode material (Li₆Co_{0.7}Zn_{0.3}O₄); 5 parts by weight of acetylene black as a conductive material, and 9 parts by weight of a PVdF binder.

The positive electrode current collector is not particularly limited as long as it does not cause a chemical change in a battery and has high conductivity. For example, stainless steel, aluminum, nickel, titanium, calcined carbon, or the like may be used, and in the case of aluminum or stainless steel, a surface thereof has been treated with carbon, nickel, titanium, silver, or the like. Also, fine irregularities may be formed on the surface of the positive electrode current collector to increase the adhesion of the positive electrode active material, and various forms such as a film, a sheet, a foil, a net, a porous body, a foam, and a nonwoven body are possible. Also, the average thickness of the positive electrode current collector may be appropriately applied in a range of 3 to 500 µm in consideration of the conductivity and total thickness of the positive electrode to be manufactured.

In addition, the positive electrode according to the present invention may have excellent electrical performance by including the above-described components. Specifically, the positive electrode may have low electrode resistance at room temperature (23±2 °C) and a low rate of increase of electrode resistance even after repeated charging and discharging of a battery, and thus the lifespan of a battery may be enhanced.

As one example, the positive electrode may have a low rate of increase of electrode resistance of 10% or less after 30-cycle charging and discharging relative to an electrode resistance during initial charging and discharging (e.g., activation). For example, the positive electrode may have a rate of increase of electrode resistance of 8% or less, 6% or less, 4% or less, or 3% or less after 30-cycle charging and discharging relative to electrode resistance during initial charging and discharging.

### Electrode assembly

Still another aspect of the present invention provides an electrode assembly including the above-described positive electrode.

The electrode assembly according to the present invention may include the above-described positive electrode, a negative electrode, and a separator interposed between the positive electrode and the negative electrode. In some cases, the separator may be excluded.

In this case, the negative electrode is manufactured by applying a negative electrode active material on a negative electrode current collector, followed by drying and pressing, and as necessary, it may optionally further include a conductive material, an organic binder polymer, a filler, and the like as described above.

As the negative electrode active material, materials may be used such as, for example, carbon and graphite materials such as graphite having a completely layered crystal structure such as natural graphite, soft carbon having a low crystallinity layered crystal structure (graphene structure; a structure in which hexagonal honeycomb planes of carbon are arranged in layers), hard carbon in which these structures are mixed with amorphous parts, artificial graphite, expanded graphite, carbon fiber, non-graphitizable carbon, carbon black, carbon nanotubes, fullerenes, activated carbon, and the like; metal composite oxides such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, Group 2 and Group 3 elements of the periodic table, halogens; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene and the like; Li-Co-Ni-based materials; titanium oxide; lithium titanium oxide, and the like.

In addition, the negative electrode current collector is not particularly limited as long as it does not cause a chemical change in a battery and has high conductivity. For example, copper, stainless steel, nickel, titanium, calcined carbon, or the like may be used, and copper or stainless steel whose surface has been treated with carbon, nickel, titanium, silver, or the like may also be used. Also, like the positive electrode current collector, the negative electrode current collector may have fine irregularities formed on the surface thereof to increase the adhesion of a negative electrode active material, and various forms such as a film, a sheet, a foil, a net, a porous body, a foam, and a nonwoven body are possible. Also, the average thickness of the negative electrode current collector may be appropriately applied in a range of 3 to 500 µm in consideration of the conductivity and total thickness of a negative electrode to be manufactured.

Furthermore, the separator is interposed between the positive electrode and the negative electrode, and an insulating thin film having high ion permeability and mechanical strength is used. Although the separator is not particularly limited as long as it is commonly used in the art, specifically, a sheet or non-woven fabric made of chemical-resistant and hydrophobic polypropylene, glass fiber, polyethylene, or the like may be used, and in some cases, a composite separator in which a porous polymer substrate such as the sheet or non-woven fabric is coated with inorganic particles/organic particles by an organic binder polymer may be used. When a solid electrolyte such as a polymer or the like is used as an electrolyte, the solid electrolyte may serve as the separator. Also, the separator may have an average pore diameter of 0.01 to 10 µm and an average thickness of 5 to 300 µm.

Meanwhile, the electrode assembly may be accommodated in a cylindrical battery, a prismatic battery, or a pouch-type battery while being wound in the form of a jelly roll or accommodated in a folding or stack-folding type in a pouch-type battery, but the present invention is not limited thereto.

### Lithium secondary battery

Yet another aspect of the present invention provides a lithium secondary battery including the above-described electrode assembly.

The lithium secondary battery according to the present invention may have a structure in which the electrode assembly is impregnated with a lithium salt-containing liquid electrolyte.

In this case, the lithium salt-containing liquid electrolyte may consist of a liquid electrolyte and a lithium salt. As the liquid electrolyte, a non-aqueous organic solvent, an organic solid electrolyte, an inorganic solid electrolyte, or the like may be used.

As the non-aqueous organic solvent, for example, an aprotic organic solvent such as N-methyl-2-pyrrolidinone, ethylene carbonate, propylene carbonate, butylene carbonate, dimethyl carbonate, diethyl carbonate, γ-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, or the like may be used.

As the organic solid electrolyte, for example, polyethylene derivatives, polyethylene oxide derivatives, polypropylene oxide derivatives, phosphoric acid ester polymers, poly alginate lysine, polyester sulfide, polyvinyl alcohol, polyvinylidene fluoride, polymers including ionic dissociation groups, or the like may be used.

As the inorganic solid electrolyte, for example, nitrides, halides, or sulfates of Li, such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like, may be used.

The lithium salt is a substance that is readily soluble in a non-aqueous electrolyte, and for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lower aliphatic carboxylic acid lithium, lithium tetraphenyl borate, lithium imide, or the like may be used.

In addition, in order to improve charging/discharging characteristics, flame retardancy, and the like, for example, pyridine, triethylphosphite, triethanolamine, cyclic ether, ethylenediamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, or the like may be added to the liquid electrolyte. In some cases, a halogen-containing solvent such as carbon tetrachloride, ethylene trifluoride, or the like may be further included to impart incombustibility, carbon dioxide gas may be further included to enhance high-temperature storage characteristics, and fluoro-ethylene carbonate (FEC), propene sultone (PRS), or the like may be further included.

Meanwhile, yet another aspect of the present invention provides a battery module including the above-described secondary battery as a unit cell and also provides a battery pack including the battery module.

The battery pack may be used as power sources of medium-to-large-sized devices that require high-temperature stability, high rate characteristics and long cycle characteristics, and specific examples of the medium-to-large-sized devices include: power tools powered by electric motors; electric vehicles including electric vehicles (EVs), hybrid electric vehicles (HEVs), plug-in hybrid electric vehicles (PHEVs), and the like; electric two-wheeled vehicles including electric bicycles (E-bikes) and electric scooters (E-scooters); electric golf carts; power storage systems; and the like, and more specific examples thereof include HEVs, but the present invention is not limited thereto.

### PREFERRED MODE FOR CARRYING OUT THE INVENTION

Hereinafter, the present invention will be described in more detail with reference to examples and experimental examples.

However, it should be understood that the following examples and experimental examples are given for the purpose of illustration only and are not intended to limit the scope of the present invention.

### Examples 1 to 3 and Comparative Examples 1 to 5. Preparation of sacrificial positive electrode material

Lithium oxide (Li₂O), cobalt oxide (CoO), and zinc oxide (ZnO) were input into a reactor and uniformly dry-mixed for about 30 minutes using a mixer. Then, the prepared raw material mixture was input into an electric furnace and fired under an argon gas (Ar) atmosphere at about 700±10 °C for 10 hours to obtain a lithium cobalt oxide (Li₆Co₁₋ₓZnₓO₄).

In this case, a molar ratio of lithium oxide and cobalt oxide put into the reactor was 1:3.0 to 3.03, and a molar ratio of cobalt oxide and zinc oxide was as shown in Table 1 below.

In addition, the volume of each sacrificial positive electrode material and the sheet resistance according to a pressure change were measured by a four-point probe method using a powder resistivity tester, and the powder electrical conductivity of each sacrificial positive electrode material was calculated using the measured volume and input mass. Results thereof are shown in the following Table 1.

**[Table 1]**

| | Molar ratio of CoO and ZnO | x | Powder electrical conductivity |
|---|---|---|---|
| Example 1 | 9:1 | 0.1 | 2.4 × 10⁻³ S/cm |
| Example 2 | 7:3 | 0.3 | 6.0 × 10⁻³ S/cm |
| Example 3 | 5:5 | 0.5 | 5.4 × 10⁻³ S/cm |
| Comparative Example 1 | 100:0 | 0 | 8.2 × 10⁻⁸ S/cm |
| Comparative Example 2 | 9.9:0.1 | 0.01 | 3.7 × 10⁻⁷ S/cm |
| Comparative Example 3 | 4:6 | 0.6 | 8.1 × 10⁻⁴ S/cm |
| Comparative Example 4 | 7:3 | 0.3 | 1.0 × 10⁻⁵ S/cm |
| Comparative Example 5 | 7:3 | 0.3 | 2.9 × 10⁻⁶ S/cm |

### Experimental Example.

In order to evaluate the performance of the sacrificial positive electrode materials prepared according to the present invention, experiments were conducted as follows.

### A) Measurement of gas emission amount

An N-methylpyrrolidone solvent was input into a homo mixer, and each sacrificial positive electrode material prepared in Examples 1 to 3 and Comparative Examples 1 to 5, a positive electrode active material (LiNi_{0.6}Co_{0.2}Mn_{0.2}O₂), a modified silanol binder, and a dispersant were input in a weight ratio of 70:28:1.7:0.3 and then mixed at 3,000 rpm for 60 minutes to prepare a pre-dispersion.

The prepared pre-dispersion was mixed with a positive electrode active material (LiNi_{0.6}Co_{0.2}Mn_{0.2}O₂) so that the content of the sacrificial positive electrode material was 2 parts by weight with respect to 100 parts by weight of the positive electrode active material, and a positive electrode active material mixed in an N-methylpyrrolidone solvent, a PVdF binder, and a carbon black conductive material were input in a weight ratio of 96:1:3 into a homo mixer, and then dispersed at 3,000 rpm for 80 minutes to prepare a slurry for a positive electrode. The prepared slurry was applied on one surface of an aluminum current collector, dried at 100°C, and then rolled to manufacture a positive electrode so that an average thickness of a positive electrode mixture layer was about 170 µm and a total thickness of a positive electrode mixture layer and a positive electrode current collector was about 200 µm.

A 2032 type coin cell was fabricated using the positive electrode and a lithium metal counter electrode. A separator (thickness: about 16 µm) made of a porous polyethylene (PE) film was interposed between the positive electrode and the lithium metal counter electrode, and a liquid electrolyte was injected to fabricate a half-cell type coin cell.

In this case, as the liquid electrolyte, a solution obtained by mixing ethylene carbonate (EC):ethyl methyl carbonate (EMC) (volume ratio= 3:7), lithium hexafluorophosphate (LiPF₆, 0.7 M), lithium bis(fluorosulfonyl)imide (LiFSI, 0.5 M), lithium tetrafluoroborate (LiBF₄, 0.2 wt%), vinyl carbonate (VC, 2 wt%), 1,3-propanesultone (PS, 0.5 wt%), and ethylene sulfate (Esa, 1 wt%) was used.

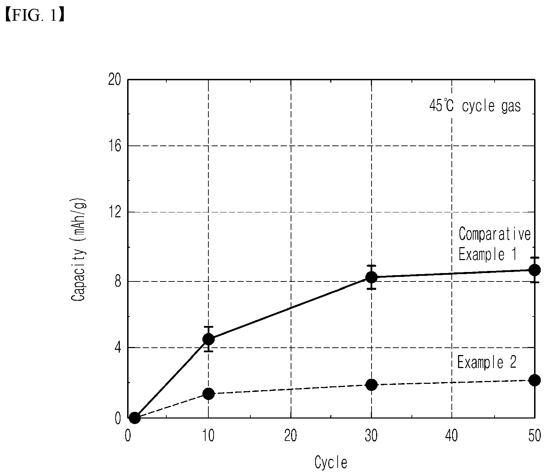

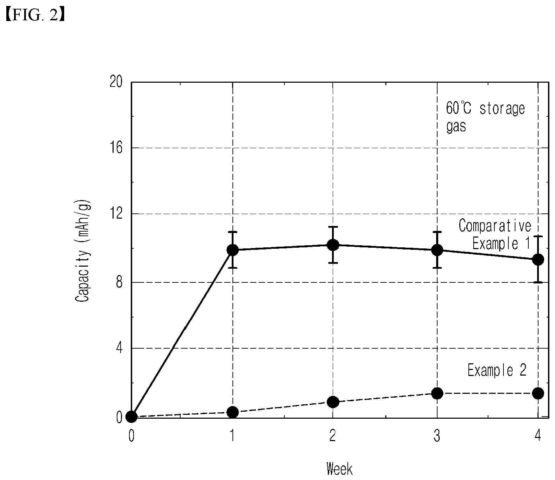

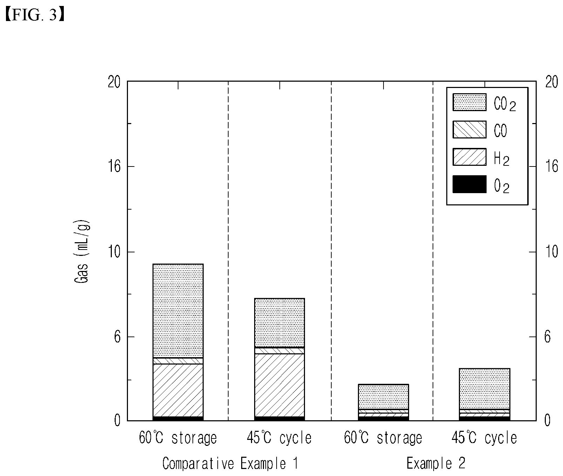

The fabricated coin cell was charged and discharged once at 25°C under 4.5C/1.5C conditions to perform formation. Then the fabricated coin cell was analyzed in terms of the amount and component of gas generated respectively ① during each charge and discharge which were repeatedly performed 50 times at 45°C under 1.5C/1.5C condition and ② during storage at 60°C for 4 weeks. Results thereof are shown in the following Table 2 and FIGS. 1 to 3.

**[Table 2]**

| Units: mL/g | Examples | | | Comparative Examples | | | | |
|---|---|---|---|---|---|---|---|---|
| | 1 | 2 | 3 | 1 | 2 | 3 | 4 | 5 |
| Gas generation amount during initial charging and discharging | 111.3 | 110.6 | 95.8 | 132.1 | 121.5 | 94.9 | 114.2 | 119.7 |

As shown in Table 2 and FIGS. 1 to 3, in the case of the sacrificial positive electrode materials prepared according to the present invention, since a lithium cobalt oxide was doped with a specific mole fraction of zinc (Zn), and powder electrical conductivity was adjusted within a specific range, the amount of gas generated not only during activation but also during charging and discharging of a battery after the activation was reduced. Specifically, the battery of Example 2 exhibited a gas generation amount reduced by 16% during activation and a gas generation amount reduced by 75% after 50-cycle charging and discharging, as compared to the battery of Comparative Example 1 using a sacrificial positive electrode material which was not doped with zinc. Also, the battery of Example 2 exhibited a gas generation amount reduced by 85% during 4-week storage, as compared to the battery of Comparative Example 1.

From these results, it can be seen that the sacrificial positive electrode material according to the present invention exhibits a reduced gas generation amount by being doped with a specific mole fraction of zinc and having controlled powder electrical conductivity.

### B) Evaluation of electrical performance

A half-cell type coin cell was fabricated in the same manner as in the measurement of a gas emission amount, except that E2DVC was used as a liquid electrolyte. Here, "E2DVC" is a kind of carbonate-based liquid electrolyte and refers to a solution obtained by mixing a mixture of EC:dimethyl carbonate (DMC):diethyl carbonate (DEC) (volume ratio=1:1:1) with lithium hexafluorophosphate (LiPF₆, 1.0 M) and VC (2 wt%).

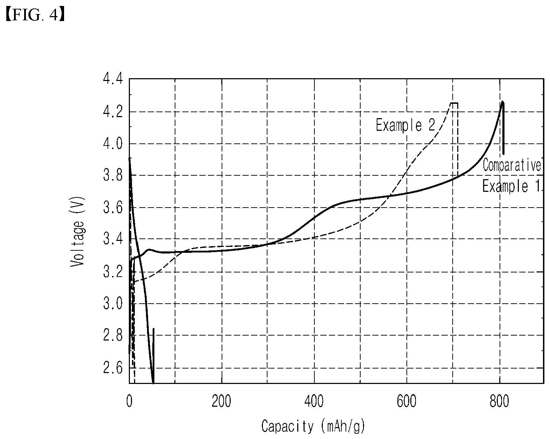

The fabricated coin cell was charged and discharged once at 25 °C under 400 mAh/144 mAh conditions to perform formation. And then charging and discharging were repeatedly performed 30 times at 25°C under 200 mAh/200 mAh conditions, and ① the electrode resistance during initial charging and discharging and after 30-cycle charging and discharging and ② the initial charge capacity of each coin cell were measured. A resistance rate of increase of the electrode was calculated from the measured electrode resistance before and after charging and discharging, and the calculated result and the measured initial charge capacity are shown in the following Table 3 and FIG. 4.

**[Table 3]**

| | Electrode resistance rate of increase after 30-cycle charging and discharging [%] | Initial charge capacity [mAh] |
|---|---|---|
| Example 1 | 7.1 | 786.3 |
| Example 2 | 5.8 | 711.1 |
| Example 3 | 6.4 | 698.7 |
| Comparative Example 1 | 18.4 | 803.7 |
| Comparative Example 2 | 15.2 | 775.2 |
| Comparative Example 3 | 10.5 | 678.9 |
| Comparative Example 4 | 12.8 | 581.6 |
| Comparative Example 5 | 11.7 | 613.4 |

As shown in Table 3, it can be seen that the sacrificial positive electrode materials prepared according to the present invention have an effect of enhancing battery performance.

Specifically, it was confirmed that the batteries including the sacrificial positive electrode materials of Examples exhibited an electrode resistance rate of increase of 10% or less even after 30-cycle charging and discharging. This means that, as the number of charging and discharging cycles of the battery increases, the degree of degradation of battery lifespan is improved. Also, it was confirmed that the batteries including the sacrificial positive electrode materials of Examples exhibited a high initial charge capacity of 690 mAh or more, whereas the batteries including the sacrificial positive electrode materials of Comparative Examples exhibited a low initial charge capacity of less than 680 mAh. Also, it was confirmed that the batteries including the sacrificial positive electrode materials of Comparative Examples 1 and 2 exhibited a high initial charge capacity of more than 700 mAh, but electrode resistance was increased as charging and discharging were repeated, and thus electrode resistance after 30-cycle charging and discharging was increased by more than 15%.

From these results, it can be seen that, since the sacrificial positive electrode materials according to the present invention is doped with a specific mole fraction of zinc and has controlled powder electrical conductivity to enhance the electrical performance of a battery, and thus the stability and lifespan of a battery including the same are effectively improved.

## Claims

1. A sacrificial positive electrode material comprising a lithium cobalt zinc oxide represented by the following Chemical Formula 1 and having a powder electrical conductivity of 1 × 10⁻⁴ S/cm to 1 × 10⁻² S/cm as determined according to the description:
[Chemical Formula 1] LiₓCo_{(1-y)}Zn_{y}O₄
in Chemical Formula 1, x and y satisfy 5≤x≤7 and 0.05≤y≤0.5.

2. The sacrificial positive electrode material of claim 1, wherein y in Chemical Formula 1 satisfies 0.2≤y≤0.4.

3. The sacrificial positive electrode material of claim 1, wherein the sacrificial positive electrode material has a powder electrical conductivity of 1 × 10⁻³ S/cm to 9 × 10⁻³ S/cm as determined according to the description.

4. The sacrificial positive electrode material of claim 1, wherein the sacrificial positive electrode material has a tetragonal structure with a space group of P4₂/nmc.

5. A positive electrode comprising:
a positive electrode current collector; and
a positive electrode mixture layer including a positive electrode active material, a conductive material, an organic binder polymer, and a sacrificial positive electrode material according to any one of claims 1 to 4 on the positive electrode current collector.

6. The positive electrode of claim 5, wherein the sacrificial positive electrode material is included in an amount of 0.001 to 5.0 parts by weight with respect to 100 parts by weight of the positive electrode active material.

7. The positive electrode of claim 5, wherein the conductive material is included in an amount of 0.5 to 10 parts by weight with respect to a total of 100 parts by weight of the positive electrode mixture layer.

8. The positive electrode of claim 5, wherein the conductive material includes one or more carbon-based materials selected from the group consisting of natural graphite, artificial graphite, carbon black, acetylene black, Ketjen black, and carbon fibers.

9. The positive electrode of claim 5, wherein the positive electrode active material is a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr), and zirconium (Zr).

10. The positive electrode of claim 5, wherein the positive electrode mixture layer has an average thickness of 100 µm to 200 µm.

11. The positive electrode of claim 5, wherein the positive electrode has a change rate of resistance as determined according to the description of 10% or less after 30-cycle charging and discharging relative to resistance during initial charging and discharging.

12. An electrode assembly comprising the positive electrode of claim 5.

13. A lithium secondary battery comprising the electrode assembly of claim 12.

## Patentansprüche

1. Positives Opferelektrodenmaterial, das ein durch die folgende chemische Formel 1 dargestelltes Lithiumcobaltzinkoxid umfasst und eine elektrische Pulverleitfähigkeit von 1 × 10⁻⁴ S/cm bis 1 × 10⁻² S/cm, bestimmt gemäß der Beschreibung, aufweist:
[Chemische Formel 1] LiₓCo_{(1-y}Zn_{y}O₄
in der chemischen Formel 1 erfüllen x und y 5≤x≤7 und 0,05≤y≤0,5.

2. Positives Opferelektrodenmaterial nach Anspruch 1, wobei y in der chemischen Formel 1 0,2≤y≤0,4 erfüllt.

3. Positives Opferelektrodenmaterial gemäß Anspruch 1, wobei das positive Opferelektrodenmaterial eine elektrische Pulverleitfähigkeit von 1 × 10⁻³ S/cm bis 9 × 10⁻³ S/cm, bestimmt gemäß der Beschreibung, aufweist.

4. Positives Opferelektrodenmaterial gemäß Anspruch 1, wobei das positives Opferelektrodenmaterial eine tetragonale Struktur mit einer Raumgruppe P4₂/nmc aufweist.

5. Positive Elektrode, umfassend:
einen positiven Elektrodenstromkollektor und
eine positive Elektrodenmischungsschicht, die ein positives Elektrodenaktivmaterial, ein leitfähiges Material, ein organisches Bindemittelpolymer und ein positives Opferelektrodenmaterial gemäß einem der Ansprüche 1 bis 4 einschließt, auf dem positiven Elektrodenstromkollektor.

6. Positive Elektrode nach Anspruch 5, wobei das positive Opferelektrodenmaterial in einer Menge von 0,001 bis 5,0 Gewichtsteilen in Bezug auf 100 Gewichtsteile des positiven Elektrodenaktivmaterials enthalten ist.

7. Positive Elektrode nach Anspruch 5, wobei das leitfähige Material in einer Menge von 0,5 bis 10 Gewichtsteilen in Bezug auf insgesamt 100 Gewichtsteile der positiven Elektrodenmischungsschicht enthalten ist.

8. Positive Elektrode nach Anspruch 5, wobei das leitfähige Material ein oder mehrere Materialien auf Kohlenstoffbasis, ausgewählt aus der Gruppe, bestehend aus Naturgraphit, künstlichem Graphit, Ruß, Acetylenruß, Ketjenruß und Kohlenstofffasern, einschließt.

9. Positive Elektrode nach Anspruch 5, wobei das positive Elektrodenaktivmaterial ein Lithiumübergangsmetallmischoxid ist, das zwei oder mehr Elemente, ausgewählt aus der Gruppe, bestehend aus Nickel (Ni), Cobalt (Co), Mangan (Mn), Aluminium (Al), Zink (Zn), Titan (Ti), Magnesium (Mg), Chrom (Cr) und Zirkonium (Zr), einschließt.

10. Positive Elektrode nach Anspruch 5, wobei die positive Elektrodenmischungsschicht eine durchschnittliche Dicke von 100 µm bis 200 µm aufweist.

11. Positive Elektrode nach Anspruch 5, wobei die positive Elektrode eine Widerstandsänderungsrate, bestimmt gemäß der Beschreibung, von 10 % oder weniger nach 30 Lade- und Entladezyklen, relativ zum Widerstand während des ersten Ladens und Entladens, aufweist.

12. Elektrodenanordnung, umfassend die positive Elektrode nach Anspruch 5.

13. Lithiumsekundärbatterie, umfassend die Elektrodenanordnung nach Anspruch 12.

## Revendications

1. Matériau d'électrode positive sacrificielle comprenant un oxyde de lithium-cobalt-zinc représenté par la Formule chimique 1 suivante et présentant une conductivité électrique en poudre de 1 x 10⁻⁴ S/cm à 1 x 10⁻² S/cm telle que déterminée selon la description :
[Formule Chimique 1] LiₓCo_{(1-y)}Zn_{y}O₄
dans la Formule chimique 1, x et y satisfont 5≤x≤7 et 0,05≤y≤0,5.

2. Matériau d'électrode positive sacrificielle selon la revendication 1, dans lequel y dans la Formule chimique 1 satisfait 0,2≤y≤0,4.

3. Matériau d'électrode positive sacrificielle selon la revendication 1, dans lequel le matériau d'électrode positive sacrificielle présente une conductivité électrique en poudre de 1 x 10⁻³ S/cm à 9 x 10⁻³ S/cm telle que déterminée selon la description.

4. Matériau d'électrode positive sacrificielle selon la revendication 1, dans lequel le matériau d'électrode positive sacrificielle présente une structure tétragonale avec un groupe d'espace de P4₂/nmc.

5. Électrode positive comprenant :
un collecteur de courant de l'électrode positive ; et
une couche de mélange d'électrode positive incluant un matériau actif d'électrode positive, un matériau conducteur, un polymère liant organique, et un matériau d'électrode positive sacrificielle selon l'une quelconque des revendications 1 à 4 sur le collecteur de courant d'électrode positive.

6. Électrode positive selon la revendication 5, dans laquelle le matériau d'électrode positive sacrificielle est inclus en une quantité allant de 0,001 à 5,0 parties en poids par rapport à 100 parties en poids du matériau actif d'électrode positive.

7. Électrode positive selon la revendication 5, dans laquelle le matériau conducteur est inclus en une quantité allant de 0,5 à 10 parties en poids par rapport à un total de 100 parties en poids de la couche de mélange d'électrode positive.

8. Électrode positive selon la revendication 5, dans laquelle le matériau conducteur inclut un ou plusieurs matériaux à base de carbone sélectionnés dans le groupe consistant en du graphite naturel, du graphite artificiel, du noir de carbone, du noir d'acétylène, du noir Ketjen, et des fibres de carbone.

9. Électrode positive selon la revendication 5, dans laquelle le matériau actif d'électrode positive est un oxyde de métal de transition composite au lithium incluant deux ou plusieurs éléments sélectionnés dans le groupe consistant en du nickel (Ni), du cobalt (Co), du manganèse (Mn), de l'aluminium (Al), du zinc (Zn), du titane (Ti), du magnésium (Mg), du chrome (Cr), et du zirconium (Zr).

10. Électrode positive selon la revendication 5, dans laquelle la couche de mélange d'électrode positive présente une épaisseur moyenne allant de 100 µm à 200 µm.

11. Électrode positive selon la revendication 5, dans laquelle l'électrode positive présente un taux d'augmentation de la résistance tel que déterminé selon la description de 10 % ou moins après 30 cycles de charge et de décharge par rapport à la résistance lors d'une charge et d'une décharge initiales.

12. Ensemble d'électrodes comprenant l'électrode positive selon la revendication 5.

13. Batterie secondaire au lithium comprenant l'ensemble d'électrodes selon la revendication 12.
